(19) Europäisches Patentamt
European Patent Office
Office européen des brevets

(11) Veröffentlichungsnummer: **0 441 232 A2**

(12) **EUROPÄISCHE PATENTANMELDUNG**

(21) Anmeldenummer: **91101168.2**

(22) Anmeldetag: **30.01.91**

(51) Int. Cl.5: **C08G 59/68**, C08G 65/10, C08F 2/50

(30) Priorität: **09.02.90 DE 4003925**

(43) Veröffentlichungstag der Anmeldung: **14.08.91 Patentblatt 91/33**

(84) Benannte Vertragsstaaten: **CH DE FR GB IT LI NL**

(71) Anmelder: **BASF Aktiengesellschaft**
**Carl-Bosch-Strasse 38**
**W-6700 Ludwigshafen(DE)**

(72) Erfinder: **Boettcher, Andreas, Dr.**
**Konrad-Adenauer-Ring 38**
**W-6907 Nussloch(DE)**
Erfinder: **Schnabel, Wolfram, Prof. Dr.**
**Krottnauerstrasse 11**
**W-1000 Berlin 38(DE)**
Erfinder: **Yagci, Yusuf, Dr.**
**Salik Aga Sokak, Sabir Apartment**
**Yenikoey(TR)**

(54) **Verfahren zur kationischen Photopolymerisation.**

(57) Die Erfindung betrifft ein Verfahren zur kationischen Photopolymerisation von Epoxiden, cyclischen Ethern und/oder Alkylvinylethern in Gegenwart eines Photoinitatorsystems, wobei als Photoinitiatorsystem ein Gemisch aus

a) mindestens einem radikal-liefernden Photoinitiator und

b) mindestens einer heteroaromatischen salzartigen Verbindung mit mindestens einer Gruppierung der Formel (I)

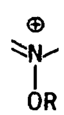

(I),

worin R vorzugsweise Alkyl bedeutet,

eingesetzt wird.

EP 0 441 232 A2

# VERFAHREN ZUR KATIONISCHEN PHOTOPOLYMERISATION

## Beschreibung

Die Erfindung betrifft ein Verfahren zur kationischen Photopolymerisation von Epoxiden, cyclischen Ethern und Alkylvinylethern in Gegenwart eines Photoinitiatorsystems.

Ein Verfahren zur Erzeugung von Carbokationen, die die kationische Polymerisation von Epoxiden, cyclischen Ethern oder Alkylvinylethern zu initiieren vermögen, basiert auf der Übertragung von Elektronen von freien Radikalen auf Oniumsalze. Derartige Verfahren sind beispielsweise beschrieben von F.A.M. Abdul Rasoul, A. Ledwith und Y. Yagci in Polymer 19, 1219 (1975), von Y. Yagci und A. Ledwith in J. Polym. Sci., Polym. Chem. Ed. 26, 1911 (1988), von Y. Yagci und W. Schnabel in Makromol. Chem. Makromol. Symp. 13/14, 161 (1988) und von H.-J. Timpe in Pure Appl. Chem. 60, 1033 (1988). Für dieses Verfahren verwendbare elektronenreiche freie Radikale können durch Photolyse oder Thermolyse geeigneter Verbindungen erzeugt werden. Oniumsalze die sich als für die Initiierung der kationischen Polymerisation besonders geeignet erwiesen haben, sind z.B. Diazoniumsalze, wie p-Chlorophenyldiazoniumhexafluorophosphat, Jodoniumsalze, wie Diphenyljodoniumhexafluorophosphat und Triarylsulfoniumsalze, wie Triphenylsulfoniumhexafluoroarsenat.

Die vorstehend genannten Photoinitiatorsysteme enthalten neben dem Oniumsalz entweder photochemische α-Spalter, wie z.B. Benzildimethylketal (H. Baumann und H.-J. Timpe, J. Prakt. Chem. 326, 529 (1984)), die gefärbte Photolyseprodukte bilden oder sie enthalten langwellig absorbierende Sensibilisatoren, wie z.B. Thioxanthone. Nachteilig ist, daß damit nur dünne Schichten kationisch gehärtet werden können. Bei Verwendung von Triarylsulfoniumsalzen werden bei der Bestrahlung übelriechende Mercaptane gebildet, die den Einsatz der strahlenhärtbaren Mischung im Lebensmittelbereich ausschließen.

Aufgabe der vorliegenden Erfindung ist es, ein Verfahren zur kationischen Polymerisation von Epoxiden, cyclischen Ethern und Alkylvinylethern aufzuzeigen, bei dem mittels neuer Photoinitiatorsysteme Vorteile gegenüber den bereits bekannten Photoinititatorsystemen zu erzielen sind.

Überraschenderweise gelingt die Lösung dieser Aufgabe durch die Verwendung einer Kombination aus radikal-lieferndem Initiator und bestimmten heteroaromatischen salzartigen Verbindungen.

Gegenstand der vorliegenden Erfindung ist ein Verfahren zur kationischen Photopolymerisation von Epoxiden, cyclischen Ethern oder Alkylvinylethern in Gegenwart eines Photoinitiatorsystems, das dadurch gekennzeichnet ist, daß als Photoinitiatorsystem ein Gemisch aus

a) mindestens einem radikal-liefernden Photoinitiator und

b) mindestens einer heteroaromatischen salzartigen Verbindung mit mindestens einer Gruppierung der allgemeinen Formel

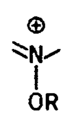

(I),

eingesetzt wird, worin R einen, gegebenenfalls substituierten, Alkyl, Alkenyl-, Alkinyl-, Hetaryl-, Alkenylcarbonyl-, Alkincarbonyl-, Alkoxycarbonyl-, Carbamoyl-, Alkylsulfonyl-, Arylsulfonylaminosulfinyl-Rest, einen substituierten Cycloalkyl-Rest oder ein, gegebenenfalls substituiertes, Hetarylkation darstellt, mit der Maßgabe, daß das Maximum der langwelligen Absorptionsbande dieser heteroaromatischen salzartigen Verbindung unter 350 nm liegt.

Als radikal-liefernde Photoinitiatoren (a) bevorzugt sind Acylphosphinoxidverbindungen, Bisacylphosphinoxidverbindungen und 6-Acyl-6H-dibenz[c,e] [1,2]oxaphosphorin-6-oxide.

Als radikal-liefernde Photoinitiatoren eignen sich beispielsweise aber auch Benzoinether und Niederalkylketale der allgemeinen Formel

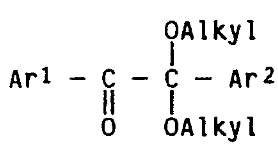

worin Alkyl einen Alkylrest mit 1 bis 4 Kohlenstoffatomen bedeutet und $Ar^1$ und $Ar^2$ untereinander gleich oder verschieden sind und für Phenyl oder für durch Alkyl mit 1 bis 4 Kohlenstoffatomen oder Halogen substituiertes Phenyl stehen.

Als heteroaromatische salzartige Verbindungen (b) bevorzugt sind Salze von eine Gruppierung der allgemeinen Formel (I) enthaltenden sechsgliedrigen Heteroaromaten mit 1 bis 3 N-Atomen im Ringsystem, der kernsubstituierten Derivate hiervon oder der benzanellierten oder hetarylanellierten Derivate hiervon, insbesondere Verbindungen der allgemeinen Formel (II)

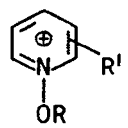 $A^{\ominus}$ (II) ,

worin R die gleiche Bedeutung hat wie in der Gruppierung der allgemeinen Formel (I), R' für Wasserstoff oder eine oder mehrere gegebenenfalls substituierte Alkyl-Gruppen, gegebenenfalls substituierte Phenyl-Gruppen, Alkoxy-Gruppen, Vinyl-Gruppen, Formyl-Gruppen, Nitro-Gruppen oder Halogenatome steht, wobei über die Reste R oder R' auch zwei Verbindungen der Formel (II) miteinander verbunden sein können, und $A^{\ominus}$ für das Anion einer anorganischen oder organischen Säure steht mit der Maßgabe, daß kein Anion $A^{\ominus}$ vorhanden ist, wenn einer der Reste R oder R' einen eine anionische Gruppierung tragenden Rest darstellt. Bevorzugt sind auch solche Verbindungen der allgemeinen Formel (II), in denen R eine Alkylgruppe mit 1 bis 6 Kohlenstoffatomen oder eine, gegebenenfalls substituierte, Alkoxycarbonylgruppe mit 1 bis 6 Kohlenstoffatomen in der Alkoxygruppe darstellt oder ein, gegebenenfalls gleich oder unsymmetrisch substituierter, N,N-Dialkylcarbamoyl-Rest ist, wobei die Substituenten am Stickstoffatom der Carbamoylgruppe auch miteinander zu einem Ring verbunden sein können. R' steht in den Verbindungen der allgemeinen Formel (II) vorzugsweise für ein Wasserstoffatom oder eine oder mehrere, gegebenenfalls substituierte, Alkylgruppen, insbesondere für ein Wasserstoffatom oder eine oder zwei Methylgruppen. Beispiele für bevorzugte heteroaromatische, salzartige Verbindungen (b) sind N-(Carbamoyloxy)-pyridinium-salze, N-(Carbamoyloxy)-picolinium-salze, N-Alkoxypyridiniumsalze, N-Aryloxylutidiniumsalze, N-Alkoxypicoliniumsalze, N-Alkoxylutidiniumsalze, N-(Alkoxycarbonyloxy)-pyridiniumsalze, N-(Alkoxycarbonyloxy)picoliniumsalze und N-(Alkoxycarbonyloxy)lutidiniumsalze, wobei jeweils die als heteroaromatische Verbindung (b) enthaltenen Salze ein Methansulfonat-, Benzolsulfonat-, Toluolsulfonat-, Alkylsulfonat-, Tetrafluoroborat-, Hexafluoroarsenat-, Hexafluoroantimonat-, Hexafluorophosphat- oder Trifluormethansulfonat-Anion enthalten können.

Die Vorteile der für das erfindungsgemäße Verfahren einzusetzenden Photoinitiatorsysteme bestehen u.a. darin, daß sie nach dem Bestrahlen praktisch geruchsneutral und in dickeren Schichten anwendbar sind.

Zum erfindungsgemäßen Verfahren ist im einzelnen folgendes auszuführen.

Als erfindungsgemäß zu polymerisierende Monomere kommen Epoxide, Alkylvinylether und cyclische Ether in Frage.

Beispiele für Epoxide können sein: Mono-1,2-epoxid, wie Epichlorhydrin, Propylenoxid, Cyclohexenoxid oder ein Glycidether eines einwertigen Alkohols oder Phenols, wie n-Butylglycidylether oder Phenylglycidylether, ein Glycidylester, wie Glycidylacrylat oder Glycidylmethacrylat, vorzugsweise ein Epoxidharz, insbesondere ein solches, das mindestens eine direkt an ein Sauerstoffatom gebundene Gruppe der Formel

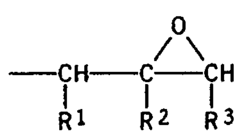

enthält, worin entweder $R^1$ und $R^3$ je ein Wasserstoffatom darstellen, in welchem Fall $R^2$ ein Wasserstoffatom oder eine Methylgruppe bedeuten, oder $R^1$ und $R^3$ zusammen $-CH_2CH_2-$ darstellen, in welchem Fall $R^2$ ein Wasserstoffatom bedeutet.

Als Beispiele für solche Harze seien Polyglycidyl- und Poly-($\beta$-methylglycidyl)-ester genannt, die man durch Umsetzung einer zwei oder mehr Carbonsäuregruppen pro Molekül enthaltenden Verbindung mit Epichlorhydrin, Glycerin-dichlorhydrin oder $\beta$-Methylepichlorhydrin in Gegenwart von Alkali erhalten kann. Solche Polyglycidylester können sich von aliphatischen Polycarbonsäuren, z.B. Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren wie Tetrahydrophthalsäure, 4-Methyltetrahydrophthalsäure, Hexahydrophthalsäure und 4-Methylhexahydrophthalsäure und von aromatischen Polycarbonsäuren, wie Phthalsäure, Isophthalsäure und Terephthalsäure ableiten. Weitere geeignete Polyglycidylester sind durch Polymerisation der Glycidylester von olefinisch ungesättigten Carbonsäuren, insbesondere Glycidylacrylat und Glycidylmethacrylat, erhältlich.

Weitere Beispiele sind Polyglycidyl- und Poly-($\beta$-methylglycidyl)-ether, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung erhältlich sind. Diese Ether lassen sich mit Poly-(epichlorhydrin) aus acyclischen Alkoholen wie Ethylenglykol, Diethylenglykol und höheren Poly-(oxyethylen)-glykolen, Propan-1,2-diol und Poly-(oxypropylen)-glykolen, Propan-1,3-diol, Poly-(oxytetramethylen)-glykolen, Pentan-1,5-diol, Hexan-2,4,6-triol, Glycerin, 1,1,1-Trimethylolpropan, Pentaerythrit und Sorbit, aus cycloaliphatischen Alkoholen wie Resorcit, Chinit, Bis-(4-hydroxycyclohexyl)-methan, 2,2-Bis-(4-hydroxycyclohexyl)-propan und 1,1-Bis-(hydroxymethyl)-cyclohexen-3, sowie aus Alkoholen mit aromatischen Kernen, wie N,N-Bis-(2-hydroxyethyl)-anilin und p,p' -Bis-(2-hydroxyethylamino)-diphenylmethan, herstellen. Man kann sie ferner aus einkernigen Phenolen wie Bis-(4-hydroxyphenyl)-methan (sonst als Bisphenol F bekannt), 4,4' -Dihydroxyphenyl, Bis-(4-hydroxyphenyl)-sulfon, 1,1,2,2-Tetrakis-(4-hydroxyphenyl)-ethan, 2,2-Bis-(4-hydroxyphenyl)-propan (sonst als Bisphenol A bekannt) und 2,2-Bis-(3,5-dibrom-4-hydroxyphenyl)-propan, sowie aus Aldehyden wie Formaldehyd, Acetaldehyd, Chloral und Furfurol mit Phenol selbst und durch Chloratome oder Alkylgruppen mit jeweils bis zu neun Kohlenstoffatomen ringsubstituiertes Phenol, wie 4-Chlorphenol, 2-Methylphenol und 4-tert.-Butylphenol, gebildeten Novolaken herstellen.

Poly-(N-glycidyl)-verbindungen lassen sich ebenfalls verwenden, beispielsweise N-Glycidylderivate von Aminen wie Anilin, n-Butylamin, Bis-(4-aminophenyl)-methan und Bis-(4-methylaminophenyl)-methan, Triglycidylisocyanurat sowie N,N' -Diglycidylderivate von cyclischen Alkylenharnstoffen wie Ethylenharnstoff und 1,3-Propylenharnstoff und Hydantoinen wie 5,5'-Dimethylhydantoin. Im allgemeinen sind diese jedoch nicht bevorzugt.

Ebenfalls kann man Poly-(S-glycidyl)-verbindungen einsetzen, z.B. Di-(S-glycidyl)-derivate von Dithiolen wie Ethan-1,2-dithiol und Bis-(4-mercaptomethylphenyl)-ether, doch werden auch diese nicht bevorzugt.

Beispiele für Epoxidharze mit Gruppen der obengenannten Formel, worin $R^1$ und $R^3$ zusammen eine $-CH_2CH_2$-Gruppe bedeuten, sind Bis-(2,3-epoxycyclopentyl)-ether, 2,3-Epoxycyclopentyl-glycidylether und 1,2-Bis-2,3-epoxycyclopentyloxy)-ethan.

In Betracht kommen auch Epoxidharze, in denen die 1,2-Epoxidgruppen an Heteroatome verschiedener Art gebunden sind, z.B. der Glycidylether/Glycidylester der Salicylsäure.

Ebenfalls verwendbar sind Epoxidharze, in denen einige oder sämtliche Epoxidgruppen mittelständig sind, wie Vinylcyclohexendioxid, Limonendioxid, Dicyclopentadiendioxid, 4-Oxatetracyclo-[6.2.1.$0^{2,7}$.$0^{3,5}$]-undecyl-9-glycidylether, 1,2-Bis-(4-oxatetracyclo[6.2.1.$0^{2,7}$.$0^{3,5}$]undecyl-9-oxy)-ethan, der 3,4-Epoxycyclohexylmethylester der 3',4'-Epoxicyclohexancarbonsäure sowie dessen 6,6'-Dimethylderivat, der Bis-(3,4-epoxicyclohexancarbonsäureester) des Ethylenglykols, 3-(3,4-epoxicyclohexyl)-8,9-epoxi-2,4-dioxaspiro[5.5]-undecan sowie epoxidierte Butadiene oder Copolymere des Butadiens mit Ethylenverbindungen wie Styrol und Vinylacetat.

Gewünschtenfalls kann man Epoxidharzgemische verwenden.

Besonders bevorzugte, bei dem erfindungsgemäßen Verfahren verwendete, gegebenenfalls vorverlängerte Epoxidharze sind die Diglycidylether von zweiwertigen Phenolen, wie 2,2-Bis-(4-hydroxyphenyl)-propan und Bis-(4-hydroxyphenyl)-methan, und von zweiwertigen aliphatischen Alkoholen, wie Butan-1,4-diol.

Gewünschtenfalls kann man das Epoxidharz einer Mischhärtung mit einem mehrwertigen Alkohol, d.h. einer Verbindung mit mindestens zwei alkoholischen, vorzugsweise primären Hydroxylgruppen im Molekül, unterwerfen. Vorzugsweise liegt der mehrwertige Alkohol in genügender Menge vor, um 0,5 bis 1,5, insbesondere 0,75 bis 1,25, alkoholische Hydroxylgruppen pro 1,2-Epoxidgruppe des Epoxidharzes zu liefern. Der mehrwertige Alkohol enthält vorzugsweise außer den alkoholischen Hydroxylgruppen nur Kohlen-, Wasserstoff- und gegebenenfalls als Ethersauerstoff oder Acetal- oder Carbonylgruppen vorhandene Sauerstoff- sowie Halogenatome. Ferner besitzt der mehrwertige Alkohol vorzugsweise ein Molekulargewicht von mindestens 100 und insbesondere höher als 1000. Geeignete mehrwertige Alkohole sind beispielsweise Poly-(oxyethylen)-glykole, Poly-(oxypropylen)-glykole, Poly-(oxytetramethylen)-glykole, Polyepichlorhydrine, Poly-(oxyethylen)-, Poly-(oxypropylen)-, bzw. Poly-(oxyetetramethylen)-triole, die durch Polymerisation von Ethylenoxid, Propylenoxid bzw. Tetrahydrofuran in Gegenwart von Glycerin oder 1,1,1-Trimethylolpropan erhältlich sind, Polycaprolactone mit Hydroxylendgruppen, Copolymere des Styrols mit Allylalkohol, Polyvinylalkohole, Hydroxypropylcellulose, hydroxyhaltige Polyvinylacetale und Teilester der Cellulose, z.B. ein Celluloseacetatbutyrat.

Vinylether, die nach dem erfindungsgemäßen Verfahren kationisch polymerisiert werden können, sind Vinylether von aliphatischen einwertigen Alkoholen mit 1 bis 12, vorzugsweise 1 bis 4 Kohlenstoffatomen sowie der 3,4-Dihydro-2H-pyranyl-(2)methylester der 3,4-Dihydro-2H-pyran-2-carbonsäure, Isobutylvinylether, Methylvinylether, Trimethylolpropan-trivinylether, Glycerintrivinylether, Triethylenglycoldivinylether, 1,4-Cyclohexandimethanoldivinylether, die Vinylether von Ethylenglykol und Poly-(oxyethylenglykolen) und cyclische Vinylether mit mindestens zwei cyclischen Vinylethergruppen, die jeweils einen Teil eines 3,4-Dihydro-2H-pyrankerns bilden, wie der 3,4-Dihydro-2H-pyranyl-(2)-methylester der 3,4-Dihydro-2H-pyran-2-carbonsäure und dessen Präpolymere.

Ein einfaches Beispiel für einen geeigneten cyclischen Ether ist das Tetrahydrofuran.

Die Monomeren können vor der Polymerisation zweckmäßigerweise gereinigt werden, beispielsweise Cyclohexenoxid durch Abdestillieren über $CaH_2$ unter vermindertem Druck, Tetrahydrofuran nach Lagerung über NaOH durch Abdestillieren über $CaH_2$, bzw. die Vinylether, wie z.B. N-Butylvinylether durch Waschen mit wäßriger Natronlauge (ca. 10 %ig) und Wasser, Trocknen mit $CaCl_2$ und $Na_2SO_4$ und Abdestillieren über $CaH_2$.

Das erfindungsgemäß einzusetzende Photoinitiatorsystem besteht aus einem Gemisch aus

a) mindestens einem radikal-liefernden Photoinitiator und

b) mindestens einer heteroaromatischen salzartigen Verbindung mit mindestens einer Gruppierung der allgemeinen Formel (I)

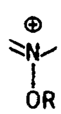 ,

worin R die vorstehend genannte Bedeutung hat.

Als radikal-bildende Photoinitiatoren (a) kommen insbesondere Acylphosphinoxide und Derivate davon in Frage.

Als Beispiele geeigneter Phosphinoxid-Verbindungen (vgl. z.B. EP-A-00 07 508, EP-A-00 57 474, EP-A-00 73 413 und DE-A 31 39 984) seien genannt:

2,2-Dimethyl-propionyldiphenylphosphinoxid, 2,2-Dimethyl-heptanoyl-diphenylphosphinoxid, 2,2-Dimethyl-octanoyl-diphenylphosphinoxid, 2,2-Dimethyl-nonanoyl-diphenylphosphinoxid, 2,2-Dimethyl-octanoyl-phenylphosphonsäuremethylester, 2-Methyl-2-ethyl-hexanoyl-diphenylphosphinoxid, 1-Methyl-1-cyclohexancarbonyl-diphenylphosphinoxid, 2,6-Dimethylbenzoyl-diphenylphosphinoxid, 2,6-Dimethoxybenzoyl-diphenylphosphinoxid, 2,6-Dichlorbenzoyl-diphenylphoisphinoxid, 2,6-Dimethoxybenzoyl-phenylphosphonsäuremethylester, 2,4,6-Trimethylbenzoyl-diphenylphosphinoxid, 2,4,6-Trimethylbenzoyl-phenylphosphonsäuremethylester, 2,3,6-Trimethylbenzoyl-diphenylphosphinoxid, 2,3,5,6-Tetramethylbenzoyl-diphenylphosphinoxid, 2,4,6-Trimethoxybenzoyl-diphenylphosphinoxid, 2,4,6-Trichlorbenzoyl-diphenylphosphinoxid, 2-Chlor-6-methylthiobenzoyl-diphenylphosphinoxid, 2,4,6-Trimethylbenzoyl-naphthylphosphinsäuremethylester, 1,3-Dimethoxynaphthalin-2-carbonyl-diphenylphosphinoxid, 2,8-Dimethoxynaphthalin-1-carbonyl-diphenylphosphinoxid, 2,4,6-Trimethylpyridin-3-carbonyl-diphenylphosphinoxid, 2,4-Dimethylchinolin-3-carbonyl-diphenylphosphinoxid, 2,4-Dimethoxyfuran-3-carbonyl-diphenylphosphinoxid und 2,4-Dimethylfuran-3-carbonyl-phenylphosphonsäuremethylester.

Als Beispiele geeigneter Bisacylphosphinoxide (vgl. z.B. DE-A-36 33 436) seien genannt:

Bis(2,6-dichlorbenzoyl)-phenylphosphinoxid,
Bis(2,6-dichlorbenzoyl)-2,5-dimethylphenylphosphinoxid,
Bis(2,6-dichlorbenzoyl)-4-ethoxyphenylphosphinoxid,
Bis(2,6-dichlorbenzoyl)-4-chlor-phenyl-phosphinoxid,
Bis(2,6-dichlorbenzoyl)-4-propyl-phenyl-phosphinoxid,
Bis(2,6-dichlorbenzoyl)-4-biphenylyl-phosphinoxid,
Bis(2,6-dimethoxybenzoyl)-2,5-dimethylphenylphosphinoxid,
Bis(2,6-dimethoxybenzoyl)-phenylphosphinoxid,
Bis(2,6-dichlor-3,4,5-trimethoxybenzoyl)-2,5-dimethylphenylphosphinoxid,
Bis(2-methyl-1-naphthoyl)-phenylphosphinoxid,
Bis(2-methyl-1-naphthoyl)-4-bisphenylyl-phosphinoxid,

Bis(2-methoxy-1-naphthoyl)-2,5-dimethylphenylphosphinoxid,
Bis(2-methoxy-1-naphthoyl)-4-ethoxyphenylphosphinoxid.

Geeignete 6-Acyl-(6H)-dibenz[c,e][1,2]oxaphosphorin-6-oxide sind beispielsweise in der DE-A-38 27 735 und in der EP-A-0 304 782 aufgeführt.

Als radikal-liefernde Photoinitiatoren (a) können jedoch beispielsweise auch Benzoinether der Formel

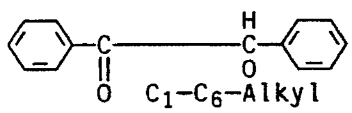 ,

wie z.B. Benzoinmethylether, Benzoinethylether, Benzoin-n-propylether, Benzoinisopropylether, Benzoin-n-butylether, Benzoinisobutylether, Benzoinamylether oder Benzoinhexylether,
sowie Niederalkylketale der allgemeinen Formel

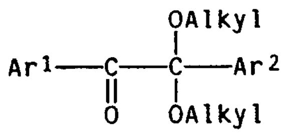 ,

worin Alkyl einen Alkylrest mit 1 bis 4 Kohlenstoffatomen, wie z.B. Methyl, Ethyl, Propyl, Isopropyl, n-Butyl und i-Butyl - wobei die Alkylreste untereinander gleich oder verschieden sein können -,
und $Ar^1$ und $Ar^2$ untereinander gleich oder verschieden sind und für Phenyl oder für durch Alkyl mit 1 bis 4 Kohlenstoffatomen oder Halogen, wie Chlor oder Brom substituiertes Phenyl, wie Tolyl, Chlorphenyl oder Bromphenyl stehen, eingesetzt werden. Als Beispiel für Niederalkylketale sei Benzildimethylketal genannt. Außerdem sei auf die EP-A-0 242 330 hingewiesen, in der ähnliche radikal-liefernde Verbindungen aufgeführt sind.

b) Als heteroaromatische salzartige Verbindungen mit mindestens einer Gruppierung der allgemeinen Formel (I)

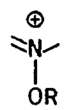 (I) ,

worin R die obengenannte Bedeutung hat, kommen insbesondere sechsgliedrige heteroaromatische Ringe mit ein, zwei oder auch drei Ringstickstoffatomen, deren kernsubstituierte Derivate, einschließlich der benzanellierten und hetarylanellierten Vertreter in Betracht. Der Begriff salzartige Verbindung schließt dabei auch innere Salze ein, d.h. ionische Verbindungen, bei denen die kationischen und anionischen Gruppen durch kovalente Bindungen miteinander verknüpft sind.
Geeignete heteroaromatische salzartige Verbindungen (b) sind insbesondere die Pyridinium-, Pyrazinium- und Pyrimidinium-Salze, die im heteroaromatischen Ring eine Gruppierung der oben angegebenen Formel (I) eingebaut enthalten, ferner die kernsubstituierten Derivate dieser Salze, die einen oder mehrere Kernsubstituenten der oben angegebenen Art im heteroaromatischen Ring enthalten, sowie auch anellierte Derivate dieser Salze, wie z.B. benzanellierte Pyridiniumsalze der in Rede stehenden Art, wie etwa die entsprechenden, gegebenenfalls kernsubstituierten, Chinolinium-, Isochinolinium- und Phenanthridinium-Salze. In der allgemeinen Formel (I) kann R für einen, gegebenenfalls substituierten, Alkylrest sowie für einen Cycloalkylrest stehen. Bevorzugt für den Rest R in der Gruppierung der Formel (I) sind Alkylreste, insbesondere Alkylgruppen mit 1 bis 6 Kohlenstoffatomen.

Zu den bevorzugten Kernsubstituenten für diese Salze gehören insbesondere die, gegebenenfalls substituierten, Alkyl-Reste. Als Anionen für diese Salze sind u.a. bevorzugt Benzolsulfonat-, Tosylat-, Alkylsulfonat-, Trifluormethansulfonat- oder Tetrafluoroborat-Anionen. Als besonders vorteilhaft für den erfindungsgemäßen Einsatz haben sich dabei die N-Alkoxy- und N-Aryloxy-pyridiniumsalze, die N-Alkoxy- und N-Aryloxy-picoliniumsalze als auch die N-Alkoxy- und N-Aryloxy-lutidiniumsalze erwiesen.

Beispiele für Verbindungen (b) mit Gruppierungen der Formel (I) sind

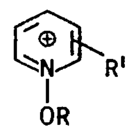 $A^{\ominus}$ (III)

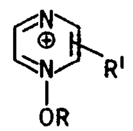 $A^{\ominus}$ (IV)

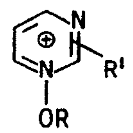 $A^{\ominus}$ (V)

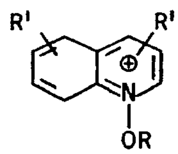 $A^{\ominus}$ (VI)

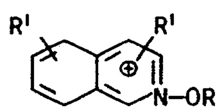 $A^{\ominus}$ (VII)

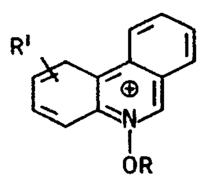 $A^{\ominus}$ (VIII)

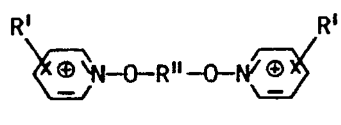 $2A^{\ominus}$ (IX)

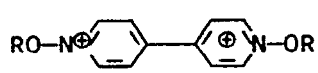 $2A^{\ominus}$ (X)

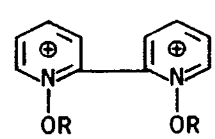 $2A^{\ominus}$ (XI)

In diesen Formeln (III) bis (XI) bedeutet der Rest R vorzugsweise einen Alkylrest mit 1 bis 6 Kohlenstoffatomen, wie die Methyl-, Ethyl- oder i-Propylgruppe. Der Rest R' bedeutet in diesen Formeln Wasserstoff (entsprechend einem unsubstituierten heteroaromatischen Ring) oder einen oder mehrere Kernsubstituenten der vorstehend angegebenen Art. Vorzugsweise steht R' für Wasserstoff oder eine oder mehrere, gegebenenfalls substituierte, Alkylgruppen, Arylgruppen, Alkoxygruppen oder Chlor. Insbesondere stellt R' ein Wasserstoffatom oder eine oder mehrere Methylgruppen, vorzugsweise 2-Methyl, 2,6-Dimethyl, oder in den Formeln (III), (IV) und (IX) auch 3,5-Dimethyl dar. In Formel (IX) steht R" für einen Alkylidenrest, insbesondere mit 2 bis 6 Kohlenstoffatomen oder einen Xylidenrest, z.B. den p-Xylidenrest. Ferner steht in den Formeln (III) bis (XI) $A^{\ominus}$ für ein Säureanion, wobei das Benzolsulfonat, p-Toluolsulfonat, Tetrafluoroborat, Trifluormethansulfonat, Hexafluorophosphat, Hexafluoroantimonat und Hexafluoroarsenat bevorzugt sind.

Besondere Bedeutung kommt Verbindungen der Formel (III) zu, wobei sich speziell die Verbindungen als besonders vorteilhaft erwiesen haben, in denen der Rest R' ein Wasserstoffatom oder eine bzw. zwei

Methylgruppen und der Rest R eine Alkylgruppe mit 1 bis 3 Kohlenstoffatomen, wie Methyl, Ethyl oder i-Propyl darstellt.

Als Beispiele für Verbindungen (b) seien genannt:
N-Methoxy-2-picolinium-hexafluoroarsenat,
N-Methoxy-2-picolinium-methylsulfat,
N-Methoxy-2-picolinium-methansulfonat,
N-Methoxy-2-picoliniumtrifluormethansulfonat,
N-Methoxy-2-picolinium-n-octylsulfonat,
N-Methoxy-2-picolinium-o/p-dodecylbenzolsulfonat,
N-Methoxy-2-picolinium-hexafluoroantimonat,
N-Methoxy-2-picolinium-methansulfonat,
N-Ethoxy-2-picolinium-tetrafluoro-borat,
N-Ethoxy-2-picolinium-p-toluolsulfonat,
N-Ethoxy-2-picoliniumtetrafluoroborat,
N-Ethoxy-2-picolinium-hexafluorophosphat,
N-Ethoxy-2-picolinium-hexachloroantimonat,
N-Isopropoxy-2-picolinium-p-toluolsulfonat,
O-(2'-Picolinium-1'-yl)-3-hydroxy-hexafluoroarsenat,
N-Methoxy-4-picolinium-methansulfonat,
N-Methoxy-4-picolinium-trifluormethansulfonat,
N-Methoxy-4-picolinium-p-toluolsulfonat,
N-Ethoxy-4-methoxypyridinium-tetrafluoroborat,
1, 4-Dimethoxy-pyridinium-tetrafluoroborat,
N-tert.-Butoxy-pyridinium-perchlorat,
N-Methoxy-3,5-lutidinium-p-toluolsulfonat,
N-Methoxy-2,6-lutidinium-methansulfonat,
N-Methoxy-2,6-lutidinium-trifluormethansulfonat,
N-Methoxy-2,6-lutidinium-trifluormethansulfonat,
N-Methoxy-2,6-lutidinium-p-toluolsulfonat,
N-Methoxy-2, 6-lutidinium-hexachloroantimonat,
N-Ethoxy-2,5-lutidinium-tetrafluoroborat,
N-Ethoxy-2,6-lutidinium-hexachloroantimonat,
N-Ethoxy-2,6-lutidinium-hexafluorophosphat,
O-(2',6'-Lutidinium-1'-yl)-3-hydroxy-propansulfonat,
N-Methoxy-2-styrylpyridinium-p-toluolsulfonat und
N,N'-p-Xylylenoxy-bis-(2-methylpyridinium)-bis(hexafluoroarsenat).

Die heteroaromatischen Verbindungen (b) der vorstehend beschriebenen Art lassen sich nach üblichen und gängigen, literaturbekannten Verfahren oder in Analogie zu diesen herstellen. Verwiesen sei in diesem Zusammenhang z.B. auf R.A. Abramovitch und E.M. Smith in "Pyridine and its Derivatives", Vol. 14 Supplement, Part 2, Seite 1 ff, J. Wiley, New York (1974).

1-Ethoxy-2-methylpyridiniumhexafluorophosphat ($EMP^{\oplus}PF_6^{\ominus}$) kann beispielsweise auch nach dem von C. Reichardt in Chem. Ber. 99, 1769 (1966) beschriebenen Verfahren hergestellt werden.

Für das erfindungsgemäße Verfahren zur kationischen Photopolymerisation werden die radikal-liefernden Photoinitiatoren (a) im allgemeinen in Mengen von 0,05 bis 10, vorzugsweise 2 bis 8 Gewichtsprozent, die heteroaromatischen salzartigen Verbindungen (b) im allgemeinen in Mengen von 1 bis 15, vorzugsweise 2 bis 10 Gewichtsprozent, wobei sich die Gewichtsprozente jeweils auf das reaktive Monomere (d.h. Epoxid, cyclische Ether oder Alkylvinylether) beziehen, eingesetzt.

Beim Photopolymerisationsvorgang verwendet man vorzugsweise aktinische Strahlung einer Wellenlänge von 200 bis 600 nm. Als aktinische Strahlungsquellen eignen sich unter anderem Kohlelichtbögen, Quecksilberdampflichtbögen, Leuchtröhren mit ultraviolettes Licht ausstrahlenden Leuchtstoffen, Argon- und Xenonglimmlampen, Wolframlampen und photographische Flutlampen. Darunter sind Quecksilberdampflichtbögen, insbesondere Höhensonnen, fluoreszierende Höhensonnen und Metallhalogenidlampen am besten geeignet. Die zur Belichtung erforderliche Zeit hängt von verschiedenen Faktoren ab, unter anderem beispielsweise dem jeweils verwendeten polymerisierbaren Substrat, der Art der Lichtquelle und deren Abstand vom bestrahlten Material. Der mit Photopolymerisationsmethoden vertraute Fachmann kann die geeigneten Zeiten leicht bestimmen. Wenn es erforderlich ist, daß das so photopolymerisierte Produkt beim Erhitzen mit einem eingemischten Heißhärter noch härtbar ist, dann muß die Bestrahlung natürlich bei einer Temperatur unterhalb derjenigen, bei der weitgehenden Heißhärtung des photopolymerisierten Produkts

durch den Heißhärter eintreten würde, erfolgen.

Die erfindungsgemäßen Mischungen sind als Oberflächenbeschichtungen verwendbar. Man kann sie, vorzugsweise als Flüssigkeit, auf ein Substrat wie Stahl, Aluminium, Kupfer, Papier oder Holz aufbringen und bestrahlen. Polymerisiert man einen Teil der Beschichtung, wie bei Bestrahlung durch eine Maske hindurch, so kann man die unbelichteten Stellen mit einem Lösungsmittel waschen, um unpolymerisierte Anteile zu entfernen, während die photopolymerisierten, unlöslichen Anteile an Ort und Stelle verbleiben. Die erfindungsgemäßen Zusammensetzungen sind somit bei der Herstellung von Druckplatten und gedruckten Schaltungen verwendbar.

Die Mischungen lassen sich auch als Klebstoffe verwenden. Eine Schicht der Zusammensetzung kann zwischen zwei Oberflächen von Gegenständen, von denen mindestens einer für aktinische Strahlung durchlässig ist, z.B. Glas, eingebracht werden, und der Aufbau wird dann bestrahlt und gewünschtenfalls erhitzt, um die Polymerisation zu vervollständigen.

Die Mischungen sind ferner bei der Herstellung von faserverstärkten Verbundstoffen, einschließlich Plattenpressmassen, verwendbar.

Die in den Beispielen genannten Teile und Prozente sind, soweit nicht anders angegeben, Gewichtsteile bzw. Gewichtsprozente.

Beispiel 1

Es wurde eine härtbare Zusammensetzung zubereitet durch Herstellen einer Mischung aus 0,05 Teilen 2,4,6-Trimethylbenzoyldiphenylphosphinoxid und 0,09 Teilen 1-Ethoxy-2-methylpyridinium-hexafluoroarsenat, gelöst in Dichlormethan, und 5 Teilen 4-Vinylcyclohexendioxid.

Es wurde ein etwa 0,05 mm (entsprechend 2 Tausendstel Zoll) dicker Film auf eine Glasplatte gezogen und UV-Bestrahlung von einer Hg-Hochstdrucklampe aus einem Abstand von etwa 25 cm ausgesetzt. Das Harz härtete innerhalb von 30 Sekunden zu einem harten Film. Der Film war in dipolaren aprotischen Lösungsmitteln unlöslich und konnte mit einem Fingernagel nicht zerkratzt werden.

Ein Teil der obigen härtbaren Zusammensetzung mit einer Viskosität von etwa 6 Centipoise bei 25 °C ließ man unter durchschnittlichen Tageslichtbedingungen 4 Monate in einem transparenten Behälter stehen. Die Viskosität blieb dabei im wesentlichen die gleiche.

Ein Teil der härtbaren Zusammensetzung wurde auf einen Stahlstreifen aufgebracht. Die behandelte Stahloberfläche wurde dann 15 Sekunden einer UV-Strahlung aus einer Hg-Höchstdrucklampe aus einem Abstand von etwa 5 cm ausgesetzt. Es bildete sich ein klarer klebrigkeitsfreier Film, der keine Anzeichen von Blasen oder anderen Fehlern aufwies.

Beispiele 2 bis 8

Es wurde der unter Beispiel 1 beschriebene Versuch mit anderen Picoliniumsalzen wiederholt und die Bestrahlungszeit so variiert, daß in allen Fällen eine kratzfeste Oberfläche gebildet wurde.

| Beispiel | Verbindung (b) | | Belichtungszeit |
|---|---|---|---|
| 2 | 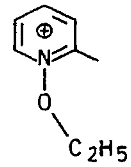 | $Cl^{\ominus}$ | > 60 Minuten |
| 3 | 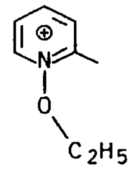 | 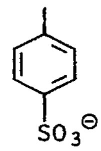 | 23 Minuten |
| 4 | 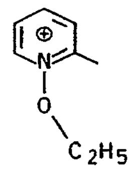 | $CF_3SO_3^{\ominus}$ | 8 Sekunden |
| 5 | 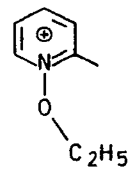 | $SbF_6^{\ominus}$ | 19 Sekunden |
| 6 | 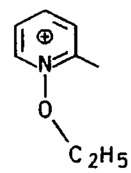 | $PF_6^{\ominus}$ | 2 Minuten |
| 7 | 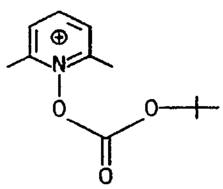 | $AsF_6^{\ominus}$ | 35 Sekunden |
| 8 | 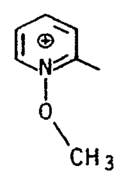 | $CH_3SO_4^{\ominus}$ | 40 Sekunden |

Beispiele 9 und 10

Tauscht man in Beispiel 1 das 4-Vinylcyclohexendioxid durch 1,4-Cyclohexandimethanol-divinylether aus, so sind Belichtungszeiten von 25 bzw. 20 Sekunden erforderlich.

## Patentansprüche

1. Verfahren zur kationischen Photopolymerisation von Epoxiden, cyclischen Ethern oder Alkylvinylethern in Gegenwart eines Photoinitiatorsystems, dadurch gekennzeichnet, daß als Photoinitiatorsystem ein Gemisch aus
   a) mindestens einem radikal-liefernden Photoinitiator und
   b) mindestens einer heteroaromatischen salzartigen Verbindung mit mindestens einer Gruppierung der allgemeinen Formel (I)

   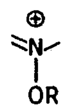

   (I)

   eingesetzt wird, worin R einen, gegebenenfalls substituierten, Alkyl, Alkenyl-, Alkinyl-, Hetaryl-, Alkenylcarbonyl-, Alkincarbonyl-, Alkoxycarbonyl-, Carbamoyl-, Alkylsulfonyl-, Arylsulfonylaminosulfinyl-Rest, einen substituierten Cycloalkyl-Rest oder ein, gegebenenfalls substituiertes, Hetarylkation darstellt, mit der Maßgabe, daß das Maximum der langwelligen Absorptionsbande dieser heteroaromatischen salzartigen Verbindung unter 350 nm liegt.

2. Verfahren nach Anspruch 1, dadurch gekennzeichnet, daß als radikalliefernder Photoinitiator (a) eine Acylphosphinoxidverbindung eingesetzt wird.

3. Verfahren nach Anspruch 1, dadurch gekennzeichnet, daß als radikalliefernder Photoinitiator ein Benzoinether eingesetzt wird.

4. Verfahren nach Anspruch 1, dadurch gekennzeichnet, daß als radikalliefernder Photoinitiator ein Niederalkylketal der allgemeinen Formel

   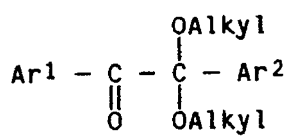

   ,

   worin Alkyl einen Alkylrest mit 1 bis 4 Kohlenstoffatomen bedeutet und $Ar^1$ und $Ar^2$ untereinander gleich oder verschieden sind und für Phenyl oder für durch Alkyl mit 1 bis 4 Kohlenstoffatomen oder Halogen substituiertes Phenyl stehen, eingesetzt wird.

5. Verfahren nach einem der vorhergehenden Ansprüche, dadurch gekennzeichnet, daß als heteroaromatische salzartige Verbindung (b) ein Salz eines eine Gruppierung der allgemeinen Formel (I) enthaltenden sechsgliedrigen Heteroaromaten mit 1 bis 3 N-Atomen im Ringsystem, der kernsubstituierten Derivate hiervon oder der benzanellierten oder hetarylanellierten Derivate hiervon eingesetzt wird.

6. Verfahren nach einem der vorhergehenden Ansprüche, dadurch gekennzeichnet, daß als salzartige heteroaromatische Verbindung (b) eine Verbindung der allgemeinen Formel (II)

   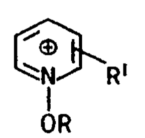

   $A^{\ominus}$ (II)

   eingesetzt wird, worin R die gleiche Bedeutung hat wie in der Gruppierung der allgemeinen Formel (I), R' für Wasserstoff oder eine oder mehrere, gegebenenfalls substituierte, Alkyl-Gruppen, gegebenenfalls substituierte, Phenyl-Gruppen, Alkoxy-Gruppen, Vinyl-Gruppen, Formyl-Gruppen, Nitro-Gruppen oder Halogenatome steht, wobei über die Reste R oder R' auch zwei Verbindungen der Formel (II)

miteinander verbunden sein können, und $A^{\ominus}$ für das Anion einer anorganischen oder organischen Säure steht mit der Maßgabe, daß kein Anion $A^{\ominus}$ vorhanden ist, wenn einer der Reste R oder R' einen eine anionische Gruppierung tragenden Rest darstellt.

**7.** Verfahren nach Anspruch 6, dadurch gekennzeichnet, daß in der Verbindung der allgemeinen Formel (II) R eine Alkylgruppe mit 1 bis 6 Kohlenstoffatomen darstellt.

**8.** Verfahren nach Anspruch 7, dadurch gekennzeichnet, daß in der Verbindung der allgemeinen Formel (II) R eine gegebenenfalls substituierte Alkoxycarbonylgruppe mit 1 bis 6 Kohlenstoffatomen in der Alkoxygruppe darstellt.

**9.** Verfahren nach Anspruch 8, dadurch gekennzeichnet, daß in der Verbindung der allgemeinen Formel (II) R ein, gegebenenfalls gleich oder unsymmetrisch substituierter, N,N-Dialkylcarbamoyl-Rest ist, mit der Maßgabe, daß die Substituenten am Stickstoffatom der Carbamoylgruppe auch miteinander zu einem Ring verbunden sein können.

**10.** Verfahren nach einem der vorhergehenden Ansprüche, dadurch gekennzeichnet, daß in der Verbindung der allgemeinen Formel (II) R' für ein Wasserstoffatom oder eine oder mehrere, gegebenenfalls substituierte, Alkylgruppen steht.

**11.** Verfahren nach Anspruch 10, dadurch gekennzeichnet, daß in der Verbindung der allgemeinen Formel (II) R' für ein Wasserstoffatom oder eine oder zwei Methylgruppen steht.

**12.** Verfahren nach einem der vorhergehenden Ansprüche, dadurch gekennzeichnet, daß sie als heteroaromatische, salzartige Verbindung (b) entweder ein N-(Alkoxycarbonyloxy)-pyridinium-salz, oder ein N-(Carbamoyloxy)-pyridinium-salz enthalten.

**13.** Verfahren nach einem der Ansprüche 1 bis 11, dadurch gekennzeichnet, daß sie als heteroaromatische, salzartige Verbindung (b) entweder ein N-(Carbamoyloxy)-picolinium-salz oder ein N-(Alkoxycarbonyloxy)-picoliniumsalz enthalten.

**14.** Verfahren nach einem der Ansprüche 1 bis 13, dadurch gekennzeichnet, daß die als heteroaromatische Verbindung (b) enthaltenen Salze ein Methansulfonat-, Benzolsulfonat-, Toluolsulfonat-, Alkylsulfonat-, Tetrafluoroborat-, Hexafluoroarsenat-, Hexafluoroantimonat-, Hexafluorophosphat-oder Trifluormethansulfonat-Anion enthalten.

**15.** Verfahren nach einem der Ansprüche 1 bis 14, dadurch gekennzeichnet, daß als heteroaromatische salzartige Verbindung (b) ein N-Alkoxylutidiniumsalz oder N-Aryloxylutidiniumsalz eingesetzt wird.